# EUROPÄISCHE PATENTSCHRIFT

(11) **EP 2 010 370 B1**
(45) Veröffentlichungstag und Bekanntmachung des Hinweises auf die Patenterteilung: **06.04.2011**
(21) Anmeldenummer: 07846749.5
(22) Anmeldetag: 22.11.2007
(51) Int. Cl.: B29C 67/00, B22F 3/105, B22F 3/00

(54) **VORRICHTUNG ZUM SCHICHTWEISEN HERSTELLEN EINES DREIDIMENSIONALEN OBJEKTS**
DEVICE FOR PRODUCING A THREE-DIMENSIONAL OBJECT IN LAYERS
DISPOSITIF DE FABRICATION EN COUCHES D'UN OBJET TRIDIMENSIONNEL

(30) Priorität: 22.11.2006 DE 102006055078
(43) Veröffentlichungstag der Anmeldung: 07.01.2009
(73) Patentinhaber: EOS GmbH Electro Optical Systems, 82152 Krailling (DE)
(72) Erfinder: MONTERO-ESCUDER, Jesús, 80469 München (DE); WEIDINGER, Jochen, 81476 München (DE)
(74) Vertreter: Prüfer & Partner GbR European Patent Attorneys
(86) Internationale Anmeldenummer: PCT/EP2007/010147
(87) Internationale Veröffentlichungsnummer: WO 2008/061764

(56) Entgegenhaltungen:
- EP-A- 1 769 904
- DE-A1- 10 360 094
- DE-C1- 19 813 742
- US-A1- 2006 219 163

## Beschreibung

Die Erfindung betrifft eine Vorrichtung zum schichtweisen Herstellen eines dreidimensionalen Objekts aus einem pulverförmigen Aufbaumaterial.

DE 198 13 742 C1 offenbart den Oberbegriff des Anspruchs 1 und beschreibt eine Vorrichtung zum Herstellen eines dreidimensionalen Objektes, die einen Träger mit einer im wesentlichen ebenen Oberfläche, eine Vorrichtung zum Aufbringen einer Schicht eines pulverförmigen durch Einwirkung elektromagnetischer Strahlung verfestigbaren Materials auf den Träger und eine Bestrahlungseinrichtung zum Bestrahlen des Materials an den dem Objekt entsprechenden Stellen der Schicht und eine Einrichtung zum Erzeugen eines elektrischen Feldes zum Abbau von Ladungsunterschieden auf den Pulverpartikeln aufweist.

DE 103 60 094 A1 beschreibt eine Bauvorrichtung zur schichtweisen Erstellung von Formteilen aus Baumaterial unter Einbringung von Strahlungsenergie, insbesondere Lasersinteranlage oder Stereolithographieanlage, mit mindestens einer horizontal verfahrbaren Beschichteranordnung zum Transport des Baumaterials 3 aus einem Vorratsbehälter in den Bauraum, wobei das Baumaterial durch mindestens eine nach unten weisende Kante der Beschichteranordnung als gleichmäßige Schicht auf einer Baufläche aufbringbar ist und wobei das Baumaterial beim Transport vom Vorratsbehälter in den Bauraum in einer nach unten wenigstens teilweise offenen Kammer der Beschichteranordnung angeordnet ist, wobei eine in die Kammer einwirkende oder in dieser angeordnete Sensoreinrichtung, durch welche das in der Beschichteranordnung vorhandene Baumaterialvolumen erfassbar ist, angeordnet ist.

Aus der DE 195 14 740 C1 sind eine Vorrichtung und ein Verfahren zum Herstellen eines dreidimensionalen Objektes mittels Lasersintern bekannt, bei denen das Auftragen und Glätten einer Schicht des pulverförmigen Aufbaumaterials in einer Arbeitsebene mit einem Beschichter in Form einer Klinge erfolgt. Die Klinge weist an ihrer Unterkante auf der in der Beschichtungsrichtung liegenden Seite eine Abschrägung auf, die zum Verdichten des aufgebrachten pulverförmigen Aufbaumaterials dient. Auf der der Beschichtungsrichtung gegenüberliegenden Seite ist eine weitere Abschrägung ausgebildet, die zum Glätten einer bereits verfestigten Schicht dient. Eine abgewandelte Ausführungsform weist Abrundungen anstelle der Abschrägungen auf.

Die optimalen Werte für die verschiedenen Abmessungen der Klinge sind in der Praxis von verschiedenen Parametern abhängig, unter anderem von der Schichtdicke der aufzutragenden Schicht und den Materialeigenschaften des pulverförmigen Aufbaumaterials. Dabei werden Werte gewählt, die unter verschiedenen bekannten und denkbaren Bedingungen zu akzeptablen Ergebnissen führen. Aufgrund eines solchen Kompromisses gelingt es, für die verschiedensten Bedingungen einen akzeptablen Prozess zu erreichen. Es kann jedoch sein, dass bei der Verwendung eines pulverförmigen Aufbaumaterials, dessen Materialeigenschaften deutlich von dem Durchschnitt der denkbaren zu verwendenden Materialien abweichen, nicht die optimalen Ergebnisse bei dem Schichtauftrag erzielt werden, so dass eine andere Klingenform und/oder ein anderer Abstand von der Arbeitsebene erforderlich wäre.

Ein Wechseln der Klingen an einer solchen Vorrichtung ist jedoch aufwändig, da dabei jedes Mal die Parallelität der Klinge zu der Arbeitsebene und der richtige Abstand von der Arbeitsebene exakt justiert werden müssen.

Zum Lösen dieses Problems ist der Anmelderin intern eine Vorrichtung bekannt, bei der eine Klinge drehbar gelagert ist und der Winkel der Unterkante der Klinge zu der Arbeitsebene mit Hilfe einer Einstellschraube einstellbar ist. Bei dieser Vorrichtung kann jedoch nur ein Parameter (der Winkel zwischen der Unterkante der Klinge und der Arbeitsebene) eingestellt werden, so dass die Arbeitsbedingungen nicht für alle verschiedenen Anforderungen optimiert werden können.

US 2006/0219163 beschreibt ein Beschichterklingenwechselsystem für Rapid-Prototyping-Systeme mit Stereolithographie, ads es ermöglicht, eine Klinge leicht von dem System zu entnehmen und wieder einzusetzen, ohne dass sich der wichtige Zwischenraum und andere Abzugseinstellungen mit Bezug auf die Oberfläche des Harzes ändern.

Die Aufgabe der vorliegenden Erfindung besteht darin, eine Vorrichtung zum Herstellen eines dreidimensionalen Objektes durch schichtweise Verfestigen von pulverförmigem Ausgangsmaterial bereitzustellen, mit der ein verbesserter Schichtauftrag für verschiedene Prozessparameter wie z.B. verschiedene Schichtdicken und unterschiedliche Materialeigenschaften der Aufbaumaterialien ermöglicht wird.

Die Aufgabe wird gelöst durch eine Vorrichtung zum schichtweisen Herstellen eines dreidimensionalen Objekts gemäß Anspruch 1. Weiterbildungen der Erfindung sind in den Unteransprüchen angegeben.

Dadurch, dass ein auswechselbares Beschichtungsmodul vorgesehen ist, das einfach und schnell in die Aufnahmeeinrichtung eingesetzt und aus ihr entnommen werden kann, ist es möglich, durch Auswahl und Einsetzen des für die gerade herrschenden Anforderungen optimalen im Voraus justierten Beschichtungsmoduls über einen großen Bereich an Materialeigenschaften und Schichtdicken jeweils einen optimalen Schichtauftrag zu erreichen und somit eine Verbesserung der hergestellten Objekte in der Oberflächenbeschaffenheit und der Maßhaltigkeit zu erzielen. Das Herstellen von dreidimensionalen Objekten mit unterschiedlichen Prozessparametern in kurzer zeitlicher Folge wird ermöglicht.

Weitere Merkmale und Zweckmäßigkeiten der Erfindung ergeben sich aus der Beschreibung von Ausführungsformen anhand der beigefügten Zeichnungen. Von den Figuren zeigen:
- Fig. 1: ein schematisches Blockdiagramm einer Ausführungsform einer Vorrichtung zum schichtweisen Herstellen eines dreidimensionalen Objekts;
- Fig. 2: eine Schnittansicht eines Abschnitts einer beispiel- haften Klinge;
- Fig. 3: eine perspektivische Ansicht einer Ausführungsform eines auswechselbaren Klingenmoduls;
- Fig. 4: eine perspektivische Ansicht einer Ausführungsform eines Klingenmodulhalters; und
- Fig. 5: eine perspektivische Ansicht einer Ausführungsform einer Einstellvorrichtung für ein auswechselbares Klingenmodul.

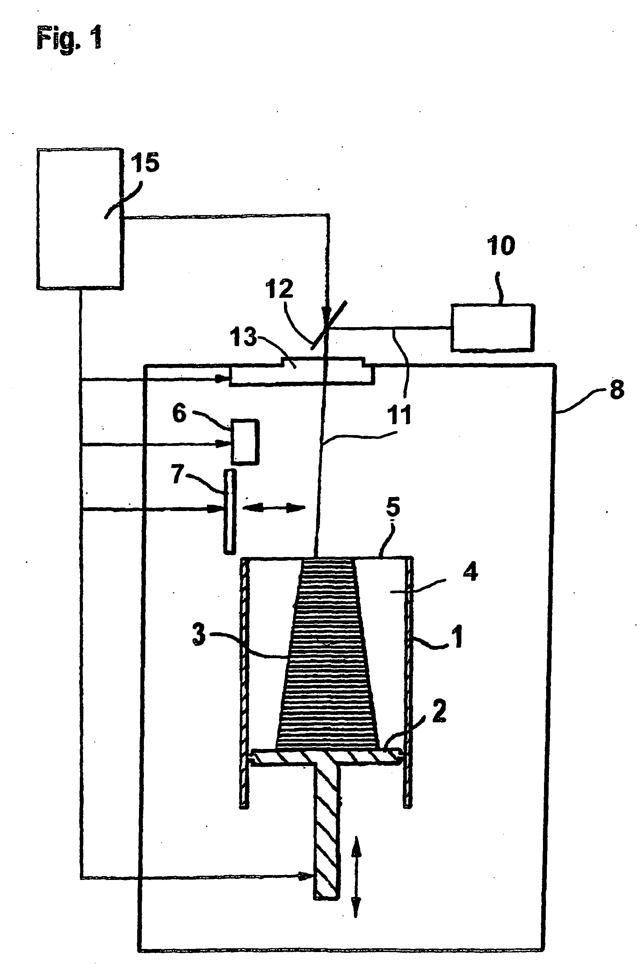

Im Folgenden wird mit Bezug auf Fig. 1 bis 4 eine beispielhafte Vorrichtung zum schichtweisen Herstellen eines dreidimensionalen Objekts gemäß der vorliegenden Erfindung beschrieben.

Als Beispiel für ein bei der Beschichtung zu verwendendes auswechselbares Beschichtungsmodul ist dabei ein Klingenmodul angegeben.

Wie aus Fig. 1 ersichtlich weist die Vorrichtung zum schichtweisen Herstellen eines Objektes einen nach oben offenen Baubehälter 1 auf. In diesem Behälter 1 ist ein Träger 2 mit einer im wesentlichen ebenen und zu der Oberkante des Baubehälter im wesentlichen parallel ausgerichteten Oberseite angeordnet. Der Träger 2 ist zum Tragen eines zu bildenden Objektes 3 ausgebildet. In Fig. 1 ist das zu bildende Objekt 3 in einem Zwischenzustand dargestellt, in dem bereits eine Mehrzahl von Schichten pulverförmigen Aufbaumaterials selektiv verfestigt wurden und von unverfestigtem Aufbaumaterial 4 umgeben sind. Der Träger 2 ist wie in Fig. 1 durch einen vertikalen Doppelpfeil angedeutet über eine (nicht dargestellte) Höhenverstelleinrichtung in vertikaler Richtung bewegbar. Die Ebene, in der Pulvermaterial aufgetragen und verfestigt wird, bildet eine Arbeitsebene 5.

Weiter ist ein Beschichter zum Aufbringen eines durch elektromagnetische Strahlung verfestigbaren pulverförmigen Aufbaumaterials auf die Arbeitsebene 5 vorgesehen. Der Beschichter enthält eine Aufbringeinheit 6, die z.B. in Form eines mit pulverförmigem Aufbaumaterial gefüllten Troges ausgebildet ist, der mit einer Dosiereinrichtung versehen sein kann, mit der eine vorbestimmte Menge des Aufbaumaterials abgegeben wird. Der Beschichter weist ferner eine Klingeneinheit 7 auf, die wie in Fig. 1 durch einen horizontalen Doppelpfeil angedeutet in horizontaler Richtung parallel zu der Arbeitsebene 5 beweglich ist. Der Bereich der Vorrichtung, in dem das Objekt 3 aufgebaut wird, wird im Allgemeinen als Bauraum 8 bezeichnet.

Die Vorrichtung weist eine Strahlungsquelle auf, z.B. in Form eines Lasers 10, der einen Laserstrahl 11 erzeugt. Oberhalb des Baubehälters 1 sind eine Ablenkeinheit, z.B. in Form eines Umlenkspiegels 12, der über eine (nicht dargestellte) Schwenkeinheit geschwenkt werden kann, und eine Fokussiereinheit 13 angeordnet.

Die Vorrichtung weist eine Steuereinheit 15 auf. Die Steuereinheit 15 steuert u.a. die Vertikalbewegung des Trägers 2, die Horizontalbewegung der Aufbringeinheit 6 und der Klingeneinheit 7, die Schwenkung des Umlenkspiegels 12 und die Fokussierung der Fokussiereinheit 13.

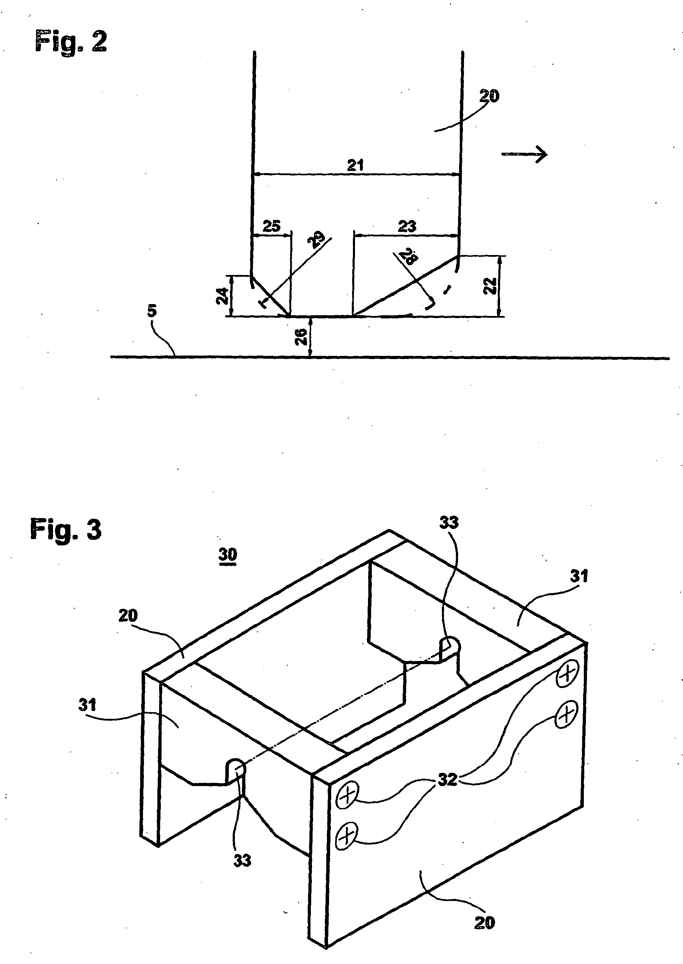

Fig. 2 zeigt einen Schnitt durch einen Abschnitt eines Beispiels einer in der Klingeneinheit 7 enthaltenen Klinge 20. Die Klinge hat im wesentlichen die Form einer flachen Platte, die sich über die gesamte Breite des zu beschichtenden Bereichs erstreckt. Für die Eigenschaften der aufgetragenen Schicht sind neben den Eigenschaften des Aufbaumaterials vor allem folgende Abmessungen der Klinge 20 maßgeblich: die Breite 21 der Klinge 20, die Höhe 22 und die Länge 23 einer Abschrägung in einer durch einen Pfeil angegebenen Beschichtungsrichtung, die Höhe 24 und die Länge 25 einer Abschrägung in einer der Beschichtungsrichtung entgegengesetzten Richtung und die Höhe 26 über der Arbeitsebene 5. Alternativ zu der abgebildeten Klinge 20 kann auch eine Klinge verwendet werden, die nur in einer Richtung eine Abschrägung aufweist oder die anstelle einer Abschrägung eine (in Fig. 2 durch gestrichelte Linien angedeutete) Abrundung mit einem vorbestimmten Radius 28, 29 aufweist.

Gemäß der vorliegenden Erfindung enthält die der Beschichter 6, 7 ein auswechselbares Beschichtungsmodul, beispielsweise ein Klingenmodul 30, und eine Aufnahmeeinrichtung zur Aufnahme des Beschichtungsmoduls, in dem vorliegenden Beispiel dementsprechend einen Klingenmodulhalter 40, der zum Aufnehmen des Klingenmoduls 30 ausgebildet ist.

Fig. 3 ist eine perspektivische Ansicht einer Ausführungsform des auswechselbaren Klingenmoduls 30. Das dargestellte Klingenmodul 30 enthält zwei Klingen, die sich über die gesamte Breite des zu beschichtenden Bereichs erstrecken und spiegelbildlich zueinander angeordnet sind. Zur Vereinfachung der Zeichnungen sind die im Betriebszustand der Arbeitsebene 5 zugewandten Unterkanten der Klinge 20 ohne Abschrägungen bzw. Abrundungen dargestellt.

Die beiden Klingen 20 sind an ihren beiden Enden jeweils über einen Verbindungsteg 31 miteinander verbunden. Die Befestigung der Klingen an den Verbindungsstegen geschieht über Befestigungselemente 32, z.B. über Schrauben, die durch in den Klingen ausgebildete Löcher hindurch in Gewinde eingeschraubt sind, die in den Verbindungsstegen ausgebildet sind.

Die Verbindungsstege 31 weisen ausgehend von ihrer im Betriebszustand der Arbeitsebene 5 zugewandten Unterseite je eine Ausnehmung 33 in Form eines Langlochs mit einem abgerundetem Ende auf. Die halbzylinderförmigen Enden der Ausnehmungen 33 sind dabei so angeordnet, dass sie eine gemeinsame Mittellinie aufweisen. Der Übergang zwischen der Unterseite der Befestigungsstege 31 und den Ausnehmungen 33 kann dabei abgeschrägt sein, um das Einsetzen des Klingenmoduls 30 in den Klingenmodulhalter 40 zu erleichtern.

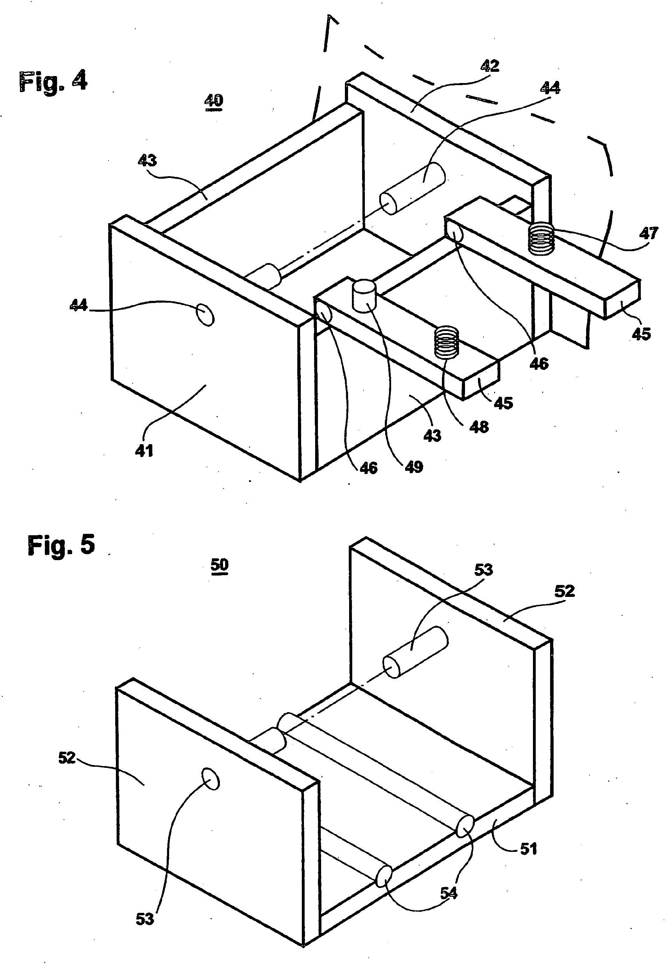

Fig. 4 zeigt eine perspektivische Ansicht einer Ausführungsform des Klingenmodulhalters 40. Der dargestellte Klingenmodulhalter 40 enthält eine Vorderwand 41, eine Rückwand 42 und zwei Seitenwände 43. Die Rückwand 42 des Klingenmodulhalters 40 ist mit dem in der Beschichtungsrichtung beweglichen Teil der Vorrichtung verbunden.

In die Vorderwand 41 und in die Rückwand 42 ist je eine Auflageachse 44 so eingesetzt, dass sie um eine vorbestimmte Länge in das Innere des Klingenmodulhalters 40 vorspringt. Die Auflageachsen 44 sind dabei so angeordnet, dass sie eine gemeinsame Mittellinie aufweisen, die parallel zu der Arbeitsebene 5 und senkrecht zu der Beschichtungsrichtung ist. Alternativ kann die Aufnahmeachse auch von der Vorderwand 41 bis zu der Rückwand 42 durchgehend ausgebildet sein. Der Durchmesser der Auflageachsen 44 ist so gewählt, dass sie in die Ausnehmung 33 der Verbindungsstege 31 des Klingenmoduls 30 eingreifen können. Vorzugsweise entspricht der Durchmesser der Auflageachsen 44 im Wesentlichen dem der halbzylinderförmigen Enden der Ausnehmungen 33.

An der von der Arbeitsebene 5 abgewandten Oberseite einer der Seitenwände 43 ist in der Nähe der Vorderwand 41 und der Rückwand 42 je eine Andruckplatte 45 über Scharniere 46 drehbar so angebracht, dass sie zu der anderen Seitenwand 43 hin geklappt werden und in diesem Zustand verriegelt werden können. Die in der Nähe der Rückwand 42 liegende Andruckplatte 45 weist dabei auf ihrer im zugeklappten Zustand zum Inneren des Klingenmodulhalters 40 hin weisenden Unterseite etwa in ihrer Mitte eine Drückeinheit 47 auf, die beispielsweise durch ein druckelastisches Element wie z.B. eine Druckfeder verwirklicht ist. Die in der Nähe der Vorderwand 41 liegende Andruckplatte 45 weist auf ihrer Unterseite seitlich versetzt zu ihrer Mitte auf der einen Seite eine Rückstelleinheit 48, die beispielsweise durch ein druckelastisches Element wie z.B. eine Druckfeder verwirklicht ist, und auf der anderen Seite einen Anschlag 49 auf. Der Anschlag 49 kann in seiner Höhe einstellbar sein, beispielsweise indem er als in die Andruckplatte 45 eingeschraubtes Stellglied wie z.B. eine Stellschraube ausgebildet ist.

Für die Herstellung eines dreidimensionalen Objekts ist es von größter Bedeutung, dass eine Beschichtung mit einem Doppelklingenbeschichter in beiden Beschichtungsrichtungen dieselben Ergebnisse liefert, d.h. dieselbe Schichtdicke und dieselbe Verdichtung der Schicht. Dazu ist ein gleicher Abstand der beiden Klingen von der Arbeitsebene 5 erforderlich. Wenn der Anschlag in seiner Höhe einstellbar ist, kann die gleiche Höhe der Klingen 20 über der Arbeitsebene 5 eingestellt werden. Vorzugsweise ist der Anschlag 49 so ausgebildet, dass diese Höhenverstellung auch nach dem Einsetzen des Klingenmoduls 30 in den Klingenmodulhalter 40 noch möglich ist.

Fig. 5 ist eine perspektivische Ansicht einer Ausführungsform einer Einstellvorrichtung 50 für das auswechselbare Klingenmodul 30. Die dargestellte Einstellvorrichtung enthält eine Grundplatte 51 und zwei Seitenwände 52.

In die Seitenwände 52 ist je eine Auflageachse 53 so eingesetzt, dass sie um eine vorbestimmte Länge in das Innere der Einstellvorrichtung 50 vorspringt. Die Auflageachsen 53 sind dabei so angeordnet, dass sie eine gemeinsame Mittellinie aufweisen, die parallel zu der Grundplatte 51 ist. Der Durchmesser der Auflageachsen 53 ist so gewählt, dass sie in die Ausnehmung 33 der Verbindungsstege 31 des Klingenmoduls 30 eingreifen können. Vorzugsweise entspricht der Durchmesser der Auflageachsen 53 im Wesentlichen dem der halbzylinderförmigen Enden der Ausnehmungen 33.

In die Grundplatte 51 sind zwei Rundstäbe 54 im Abstand zueinander so eingelassen, dass ihre Scheitellinien in derselben Höhe parallel zu der Grundplatte 51 verlaufen.

Zum Betreiben der Vorrichtung werden zunächst Klingenmodule 30 nach Bedarf justiert. Dazu wird ein vormontiertes Klingenmodul 30 so in die Einstellvorrichtung 50 eingesetzt, dass die Auflageachsen 53 in die Ausnehmungen 33 der Verbindungsstege 31 eingreifen und die Enden der Ausnehmungen 33 auf den Auflageachsen 53 ruhen. Durch die Rundstäbe 54 werden die (nur lose befestigten) Klingen 20 in eine Stellung gebracht, in der sie parallel zu der Oberfläche der Grundplatte 51 sind. In diesem Zustand werden die Befestigungselemente 32, also beispielsweise die Befestigungsschrauben, angezogen. Dadurch wird sichergestellt, dass die Unterkanten der Klingen parallel zueinander verlaufen und dass sie im eingebauten Zustand des Klingenmoduls 30 parallel zu der Arbeitsebene 5 verlaufen.

Durch Verwenden verschiedener Klingen 20 mit unterschiedlichen Eigenschaften und durch Verändern der Höhe der Auflageachsen 53 relativ zu den Rundstäben 54 (beispielsweise durch austauschbare Einsätze mit Auflageachsen 53 in den Seitenwänden 52 oder durch Verwendung verschiedener Einstellvorrichtungen 50) kann eine Vielzahl von Klingenmodulen 30 im Voraus justiert werden, die für verschiedene Materialeigenschaften und/oder Schichtdicken optimiert sind.

Für einen konkreten Anwendungsfall (ein bestimmtes Material mit einer bestimmten Korngröße und eine bestimmte Schichtdicke) wird aus den vorjustierten Klingenmodulen 30 das am besten geeignete ausgewählt und in den Klingenmodulhalter 40 eingesetzt.

Dazu wird das Klingenmodul 30 zunächst so auf die Auflageachsen 44 aufgesetzt, dass diese in die Ausnehmungen 33 der Verbindungsstege 31 eingreifen und die Enden der Ausnehmungen 33 auf den Auflageachsen 44 ruhen. Das Klingenmodul 30 kann um die Auflageachsen 44 gekippt werden.

Anschließend werden die beiden Andruckplatten 45 zugeklappt und verriegelt. Dabei drückt die Druckfeder 47 von oben auf das Klingenmodul 30 und drückt dieses somit gegen die entsprechende Auflageachse 44. Die Rückstellfeder 48 drückt seitlich versetzt zu der anderen Auflageachse 44 auf das Klingenmodul 30 und wirkt somit einer Kippbewegung des Klingenmoduls 30 soweit entgegen, bis die Oberseite des Klingenmoduls 30 gegen den Anschlag 49 stößt. Somit ist die Lage des Klingenmoduls 30 beim Einsetzen in den Klingenmodulhalter 40 reproduzierbar festgelegt.

Die Rückstellfeder 48 und der Anschlag 49 drücken gemeinsam den Verbindungssteg 31 gegen die Auflageachse 44. Die Höhe des Anschlags 49 über der Unterseite der Andruckplatte 45 ist dabei im Voraus so eingestellt, dass die beiden (bereits durch die Vorjustierung zueinander und zu der Arbeitsebene 5 parallelen) Unterkanten der Klingen 20 denselben Abstand von der Arbeitsebene 5 haben. Es ist jedoch auch möglich, die Höhe des Anschlags 49 nach dem Einsetzen des Klingenmoduls 30 zu verändern, um die Unterkanten der Klingen 20 auf denselben Abstand von der Arbeitsebene 5 einzustellen. Dabei wird dann das Klingenmodul 30 je nach der Einstellungsrichtung durch den weiter vorspringenden Anschlag 49 gegen die Rückstellkraft der Rückstellfeder 48 oder durch die Rückstellfeder 48 gegen den zurückweichenden Anschlag 49 bewegt.

Somit kann das Klingenmodul 30 einfach, schnell und werkzeugfrei in den Klingenmodulhalter 40 eingesetzt und aus ihm entnommen werden.

Zum Aufbau eines Objekts 3 steuert die Steuereinheit 15 zunächst die Höhenverstellung des Trägers 2 so, dass die Oberfläche des Trägers (bzw. in späteren Schritten die Oberfläche des bereits gebildeten Teils des Objekts 3 und des umgebenden unverfestigten Aufbaumaterials 4) in der Arbeitsebene 5 liegt. Dann wird durch Horizontalbewegung der Aufbringeinheit 6 und der Klingeneinheit 7 eine Schicht des pulverförmigen Aufbaumaterials auf die Arbeitsebene 5 aufgebracht und von der Klingeneinheit 7 eingeebnet. Das geschieht beispielsweise so, dass die Aufbringeinheit 6 eine vorbestimmte Menge des pulverförmigen Aufbaumaterials zwischen den beiden Klingen 20 des Klingenmoduls 30 einbringt, die dann durch die in der Bewegungsrichtung hinten angeordnete Klinge 20 zu einer gleichmäßigen Schicht abgezogen und evtl. verdichtet wird.

Nach dem Aufbringen der Schicht wird der Laserstrahl 11 über den Umlenkspiegel 12 und die Fokussiereinheit 13 so abgelenkt bzw. fokussiert, dass er der Reihe nach die zu verfestigenden Stellen der aufgebrachten Pulverschicht abfährt und somit das Pulver verfestigt. Anschließend wird der Träger 2 um einen Verfahrweg, der der Dicke einer Schicht entspricht, nach unten verfahren und der gesamte Vorgang wiederholt, bis das Objekt 3 fertiggestellt ist. Dabei kehrt sich die Bewegungsrichtung der Aufbringeinheit 6 und der Klingeneinheit 7 jeweils zwischen zwei aufeinanderfolgenden Beschichtungsvorgängen um.

Die Erfindung ist nicht auf die beschriebenen Ausführungsformen eingeschränkt. Ausgehend von dem dargestellten Grundaufbau können die Ausgestaltung des Klingenmoduls und des Klingenhalters und die Aufnahme des Klingenmoduls in dem Klingenhalter auch auf andere dem Fachmann offensichtliche abgewandelte Weise verwirklicht sein.

So ist in der dargestellten Ausführungsform beispielsweise ein symmetrisch aufgebautes Klingenmodul beschrieben, das zwei spiegelbildlich zueinander angeordnete Klingen enthält, sodass in zwei Bewegungsrichtungen pulverförmiges Aufbaumaterial aufgetragen werden kann. Die Erfindung kann jedoch auch auf ein Klingenmodul übertragen werden, das nur eine Klinge 20 enthält. Dabei ist entweder die Beschichtung nur in einer Bewegungsrichtung der Klinge möglich, oder die Klinge ist so ausgebildet, dass die Beschichtung in zwei entgegengesetzten Bewegungsrichtungen durchgeführt werden kann. Dabei kann der Beschichter mit einer Hubvorrichtung versehen sein, die das Klingenmodul von der Arbeitsebene 5 wegbewegt, also beispielsweise zur Bewegung über einen Pulverrest hinweg hochhebt oder -schwenkt, um diesen Pulverrest bei einer Bewegung in die entgegengesetzte Beschichtungsrichtung weiter zu verwenden.

Die Drückeinheit 47, die Rückstelleinheit 48 und der feste oder einstellbare Anschlag 49 können statt an dem Klingenmodulhalter 40 auch den dem Klingenmodul 30 angebracht oder auf beide verteilt sein. Die Anbringung an dem Klingenmodul ist vor allem bei einem einstellbaren Anschlag 49 vorteilhaft, da beim Herausnehmen und Wiedereinsetzen die für das jeweilige Modul optimale Einstellung erhalten bleibt und das Modul so beim nächsten Einsetzen ohne weitere Einstellung des Anschlags direkt verwendet werden kann.

Die Auflageachse 44 kann alternativ auch so ausgebildet sein, dass sie über die Vorder- und Rückwand 41, 42 des Klingenmodulhalters 40 nach außen hinausragt. Die Drückeinheit 47, die Rückstelleinheit 48 und/oder der feste oder einstellbare Anschlag 49 können dann auch außerhalb der Vorder- oder Rückwand angeordnet sein.

Die Lagerung des Klingenmoduls 30 in dem Klingenmodulhalter 40 kann alternativ auch so ausgebildet sein, dass das Klingenmodul 30 eine Lagerachse aufweist und der Klingenmodulhalter 40 eine Ausnehmung zum Aufnehmen der Lagerachse.

Das Verkippen des Klingenmoduls in dem Klingenmodulhalter kann auch auf andere Weise erfolgen als durch Eingreifen einer Lagerachse in eine Ausnehmung. So kann das Klingenmodul beispielsweise drei Stützen enthalten, mit denen es sich in dem Klingenmodulhalter abstützt. Die Stützen können auf einer Fläche des Klingenmodulhalters ruhen oder in Ausnehmungen wie z.B. runden oder kegelförmigen Vertiefungen aufgenommen sein. Die Auflagepunkte zweier dieser Stützen definieren eine Achse, um die das Klingenmodul kippbar ist, die dritte Stütze dient als fester oder verstellbarer Anschlag zum Definieren der Endstellung des Klingenmoduls. Alternativ können alle oder ein Teil der Stützen auch an dem Klingenmodulhalter angebracht sein und auf einer Fläche des Klingenmoduls oder in Ausnehmungen des Klingenmoduls ruhen. Sind außer oder statt dem Anschlag auch eine oder beide der anderen Stützen einstellbar, kann die Lage der Kippachse im Raum eingestellt werden. Anstelle der Stützen können auch die Auflagepunkte der Stützen einstellbar sein.

Anstelle des Einstellens der Stellung des Klingenmoduls unter Ausnutzung einer Kippbewegung kann die Stellung auch durch eine lineare oder kurvenförmige translatorische Bewegung eingestellt werden.

Der Klingenmodulhalter kann auch durch den Beschichter selber gebildet sein, so dass das Klingenmodul ohne einen getrennt ausgebildeten Modulhalter direkt an dem Beschichter angebracht sein kann. Das kann beispielsweise so realisiert sein, dass der Beschichter eine Aufnahmeeinrichtung aufweist, die beispielsweise als Platte ausgebildet ist, die nur einen einzelnen Achszapfen aufweist, aber eine Drehbarkeit und Einstellbarkeit des Moduls wie oben beschrieben ermöglicht.

Die Erfindung ist auch nicht auf Beschichter mit Klingen eingeschränkt. Es können beliebige Glättungselemente verwendet werden, die zum Verteilen und Glätten des Pulvers geeignet sind. Dazu zählen unter anderem feste und flexible Klingen, Bürsten, Wischblätter wie z.B. Gummilippen, aber auch drehbar gelagerte Glättungselemente wie z.B. Walzen. Ein oder mehrere dieser Glättungselemente sind an einem Glättungsmodul angebracht, das auf dieselbe Weise wie oben für das Klingenmodul beschrieben ausgebildet und in den Beschichter einsetzbar und einstellbar ist.

Im Allgemeinen kann die Erfindung auf Module mit beliebigen Aufbringelementen angewendet werden, die zum Aufbringen und Verteilen des Pulvers geeignet sind. Dazu zählen unter anderem Elemente zum Verdichten des Pulvers wie z.B. Rüttler oder Vibratoren, die vertikal und/oder horizontal in Längs- und/oder Querrichtung linear oder auf gekrümmten Bahnen vibrieren können, Elemente zum Temperieren des Pulvers wie z.B. beheizbare Klingen, Elemente zum Fluidisieren der Pulvers wie z.B. eine Fluidisierungsplatte, durch die ein Gas in das Pulver eingeleitet werden kann, Elemente zum elektrostatischen Laden oder Entladen des Pulvers wie z.B. eine Lade- oder Entladeelektrode, Elemente zum Mischen oder Sieben des Pulvers usw. Von diesen Aufbringelementen ist zumindest eines an einem Beschichtermodul angebracht, das auf dieselbe Weise wie oben für das Klingenmodul beschrieben ausgebildet und in den Beschichter einsetzbar und einstellbar ist.

Anstelle eines Lasers kann auch eine andere Energiequelle, die zur Verfestigung des pulverförmigen Materials geeignet ist, wie z.B. eine Elektronenstrahlquelle verwendet werden. Auch andere Arten des Energieeintrags sind möglich, wie z.B. Maskensintern, Inhibitionssintern oder ein linienförmiger Energieeintrag oder über ein Array.

Als pulverförmiges Aufbaumaterial können verschiedene Materialien wie z.B. Kunststoff, Metall, Keramik, Sand, beschichte Pulver, mehrkomponentige Pulver und Kombinationen davon verwendet werden.

## Patentansprüche

1. Vorrichtung zum Herstellen eines dreidimensionalen Objektes (3) durch schichtweise Verfestigen von pulverförmigem Aufbaumaterial an den dem Querschnitt des herzustellenden Objektes (3) in der jeweiligen Schicht entsprechenden Stellen durch Einwirkung eines Lasers oder einer anderen Energiequelle, mit
einem Träger (2), auf dem das Objekt (3) aufgebaut wird, und
einem Beschichter (6, 7) zum Auftragen einer Schicht des Aufbaumaterials auf den Träger oder eine zuvor zumindest partiell verfestigte Schicht, der eine Aufnahmeeinrichtung (40) zur Aufnahme eines Beschichtungsmoduls (30) enthält,
**dadurch gekennzeichnet, dass**
die Aufnahmeeinrichtung (40) so ausgebildet ist, dass ein aus einer Mehrzahl von vorjustierten Beschichtungsmodulen ausgewähltes Beschichtungsmodul (30) auswechselbar so in die Aufnahmeeinrichtung (40) eingesetzt und aus ihr entnommen werden kann, dass eine vorbestimmte Stellung des Beschichtungsmoduls (30) in der Aufnahmeeinrichtung (40) durch Verkippen des Beschichtungsmoduls (30) in der Aufnahmeeinrichtung (40) reproduzierbar festgelegt ist.

2. Vorrichtung nach Anspruch 1, bei der die Aufnahmeeinrichtung (40) zur Aufnahme eines zum Verteilen und Glätten des pulverförmigen Aufbaumaterials geeigneten Glättungsmoduls, vorzugsweise eines Klingenmoduls (30) ausgebildet ist und/oder die vorbestimmte Stellung vor und/oder nach dem Einsetzen des Beschichtungsmoduls (30) in die Aufnahmeeinrichtung (40) einstellbar ist.

3. Vorrichtung nach einem der Ansprüche 1 bis 2, bei der die Aufnahmeeinrichtung (40) einen Anschlag (49) zum Erreichen der vorbestimmten Stellung enthält, wobei der Anschlag (49) vorzugsweise verstellbar ausgebildet ist, wobei der Anschlag (49) in weiter bevorzugter Weise durch ein Stellglied, in noch weiter bevorzugter Weise durch eine Stellschraube verwirklicht ist.

4. Vorrichtung nach einem der Ansprüche 1 bis 3, bei der die Aufnahmeeinrichtung (40) eine Rückstelleinheit (48) enthält, die zum Bewirken einer Bewegung des Beschichtungsmoduls (30) in die vorbestimmte Stellung ausgebildet ist, wobei die Rückstelleinheit (48) vorzugsweise durch ein druckelastisches Element, in weiter bevorzugter Weise durch eine Druckfeder verwirklicht ist.

5. Vorrichtung nach einem der Ansprüche 1 bis 4, bei der die Aufnahmeeinrichtung (40) so ausgebildet ist, dass das Beschichtungsmodul um eine vorbestimmte Achse kippbar ist, wobei vorzugsweise die Lage der vorbestimmten Achse verstellbar ist, und/oder die Aufnahmeeinrichtung (40) zumindest eine Ausnehmung enthält, die zur Aufnahme des Beschichtungsmoduls (30) ausgebildet ist.

6. Vorrichtung nach einem der Ansprüche 1 bis 5, bei der
die Aufnahmeeinrichtung (40) eine Drückeinheit (47) enthält, die zum Ausüben einer Druckkraft zwischen dem Beschichtungsmodul (30) und der Aufnahmeeinrichtung (40) ausgebildet ist, wobei die Drückeinheit (47) vorzugsweise durch ein druckelastisches Element, in weiter bevorzugter Weise durch eine Druckfeder verwirklicht ist, und/oder
die Aufnahmeeinrichtung (40) eine Andruckplatte (45) enthält, die so ausgebildet ist, dass sie in eine Stellung über dem Beschichtungsmodul (30) bringbar ist, und die Drückeinheit (47) oder die Rückstelleinheit (48) und der Anschlag (49) an der Andruckplatte (45) angebracht sind, wobei vorzugsweise die Rückstelleinheit (48) und der Anschlag (49) an derselben Andruckplatte (45) angebracht sind wie die Drückeinheit (47).

7. Vorrichtung nach einem der Ansprüche 1 bis 6, bei der die Aufnahmeeinrichtung (40) so ausgebildet ist, dass das Beschichtungsmodul (30) werkzeugfrei in die Aufnahmeeinrichtung (40) einsetzbar ist.

8. Beschichtungsmodul (30), angepasst an das Einsetzen in eine Vorrichtung nach einem der Ansprüche 1 bis 7, mit
zumindest einem ersten Beschichtungselement, das zum Aufbringen und Verteilen des pulverförmigem Aufbaumaterials geeignet ist, und
zumindest einem Einsetzelement (31), an dem das Beschichtungselement befestigt ist und das zum Einsetzen des Beschichtungsmoduls (30) in einer vorbestimmten Stellung in die Vorrichtung so ausgebildet ist, dass das Beschichtungsmodul (30) auswechselbar so in die Aufnahmeeinrichtung (40) der Vorrichtung eingesetzt und aus ihr entnommen werden kann, dass eine vorbestimmte Stellung des Beschichtungsmoduls (30) in der Aufnahmeeinrichtung (40) durch Verkippen des Beschichtungsmoduls (30) in der Aufnahmeeinrichtung (40) reproduzierbar festgelegt ist.

9. Beschichtungsmodul (30) nach Anspruch 8, bei dem
das Beschichtungselement ein Element ist aus Elementen zum Verdichten des Pulvers, Elementen zum Temperieren des Pulvers, Elementen zum Fluidisieren des Pulvers, Elementen zum elektrostatischen Laden oder Entladen des Pulvers und/oder Elementen zum Mischen oder Sieben des Pulvers oder
das Beschichtungselement ein Glättungselement ist, das zum Verteilen und Glätten des pulverförmigem Aufbaumaterials geeignet ist, vorzugsweise eine feste oder flexible Klinge, eine Bürste, ein Wischblatt wie z.B. eine Gummilippe, oder ein drehbar gelagertes Glättungselemente wie z.B. eine Walze ist, so dass das Beschichtungsmodul ein Glättungsmodul ist oder
das Beschichtungselement eine Klinge (20) ist, die zum Abziehen des pulverförmigem Aufbaumaterials zu einer Schicht geeignet ist, so dass das Beschichtungsmodul ein Klingenmodul ist.

10. Beschichtungsmodul (30) nach einem der Ansprüche 8 bis 9, bei dem
ein zweites Beschichtungselement (20) im Wesentlichen parallel zu dem ersten Beschichtungselement (20) angeordnet und an dem Einsetzelement (31) befestigt ist, und/oder
das Einsetzelement in Form von zwei zueinander parallelen verlaufenden Verbindungsstegen (31) ausgebildet ist , wobei die Beschichtungselemente (20) vorzugsweise über Befestigungselemente (32) mit den Verbindungsstegen (31) verbunden sind, und/oder
das Beschichtungsmodul so ausgebildet ist, dass es in der Aufnahmevorrichtung um eine vorbestimmte Achse kippbar ist, wobei vorzugsweise die Lage der vorbestimmten Achse verstellbar ist.

11. Beschichtungsmodul (30) nach einem der Ansprüche 8 bis 10, das einen Anschlag zum Erreichen der vorbestimmten Stellung enthält, wobei der Anschlag (49) vorzugsweise verstellbar ausgebildet ist, wobei der der Anschlag in weiter bevorzugter Weise durch ein Stellglied, in noch weiter bevorzugter Weise durch eine Stellschraube verwirklicht ist.

12. Beschichtungsmodul (30) nach einem der Ansprüche 8 bis 11, das eine Rückstelleinheit enthält, die zum Bewirken einer Bewegung des Beschichtungsmoduls (30) in die vorbestimmte Stellung ausgebildet ist, wobei die Rückstelleinheit (48) vorzugsweise durch ein druckelastisches Element, in weiter bevorzugter Weise durch eine Druckfeder verwirklicht ist, und/oder
das eine Drückeinheit enthält, die zum Ausüben einer Druckkraft zwischen dem Beschichtungsmodul (30) und der Aufnahmeeinrichtung (40) ausgebildet ist, wobei die Drückeinheit vorzugsweise durch ein druckelastisches Element, in weiter bevorzugter Weise durch eine Druckfeder verwirklicht ist, und/oder
das zum werkzeugfreien Einsetzen in die Vorrichtung ausgebildet ist.

13. Verfahren zum Herstellen eines dreidimensionalen Objektes durch schichtweise Verfestigen von pulverförmigem Aufbaumaterial an den dem Querschnitt des herzustellenden Objektes in der jeweiligen Schicht entsprechenden Stellen durch Einwirkung eines Lasers oder einer anderen Energiequelle mit einer Vorrichtung nach einem der Ansprüche 1 bis 7, mit den Schritten
Bereitstellen einer Mehrzahl von Beschichtungsmodulen (30) nach einem der Ansprüche 8 bis 12,
Auswählen eines dieser Beschichtungsmodule (30) entsprechend dem verwendeten pulverförmigen Aufbaumaterial und der gewünschten Schichtdicke,
Einsetzen des Beschichtungsmoduls (30) in einer vorbestimmten Stellung in eine Vorrichtung zum Herstellen eines dreidimensionalen Objektes und
wiederholtes schichtweises Auftragen und Verfestigen des pulverförmigen Aufbaumaterials zum Bilden des dreidimensionalen Objektes (3).

14. Verfahren nach Anspruch 13, das weiter einen Schritt des Einstellens der vorbestimmten Stellung vor und/oder nach dem Einsetzen des Beschichtungsmoduls (30) in die Vorrichtung enthält, und/oder bei dem der Schritt des Einsetzens des Beschichtungsmoduls (30) in die Vorrichtung das Rückstellen des Beschichtungsmoduls (30) gegen einen Anschlag (49) zum Erreichen der vorbestimmten Stellung enthält wobei das Verfahren vorzugsweise weiter einen Schritt des Einstellens einer Stellung des Anschlags (49) vor und/oder nach dem Einsetzen des Beschichtungsmoduls (30) in die Vorrichtung enthält.

15. Verfahren nach einem der Ansprüche 13 bis 14, bei dem
der Schritt des Einsetzens des Beschichtungsmoduls (30) in die Vorrichtung das Drücken des Beschichtungsmoduls (30) gegen die Vorrichtung enthält, und oder
der Schritt des Einsetzens des Beschichtungsmoduls (30) in die Vorrichtung enthält:
Drücken (48) des Beschichtungsmoduls (30) seitlich versetzt zu einer vorbestimmten Achse zum Kippen des Beschichtungsmoduls (30) um die Achse und
Stoppen (49) der Kippung des Beschichtungsmoduls. (30) in der vorbestimmten Stellung, und/oder
das Einsetzen des Beschichtungsmoduls (30) in die Vorrichtung werkzeugfrei erfolgt.

## Claims

1. Apparatus for manufacturing a three-dimensional object (3) by solidifying a powdery constituent material layer by layer at the positions corresponding to the profile of the object (3) to be manufactured in the corresponding layer, by the action of a laser or another energy source, comprising
a support (2) on which the object (3) is formed, and
an applicator (6, 7) for applying a layer of the constituent material onto the support or a layer at least partially solidified in advance and having a receiving device (40) for receiving an applying module (30),
**characterized in that**
the receiving device (40) is formed in a way so that an applying module (30) selected from a plurality of preadjusted applying modules can be exchangeably inserted into and removed from the receiving device (40) in a way that a predetermined position of the applying module (30) in the receiving device (40) is reproducibly determined by tilting the applying module (30) in the receiving device (40).

2. Apparatus according to claim 1, wherein
the receiving device (40) is formed to receive a smoothing module suited for distributing and smoothing the powdery constituent material, preferably a blade module (30), and/or
the predetermined position is adjustable before and/or after inserting the applying module (30) into the receiving device (40).

3. Apparatus according to claim 1 or 2, wherein the receiving device (40) has a stop (49) for determining the predetermined position, the stop (49) preferably being adjustably formed, the stop (49) further preferably being realized by a setting element, still further preferably by a setting screw.

4. Apparatus according to one of claims 1 to 3, wherein the receiving device (40) has a return unit (48) which is formed to cause a movement of the applying module (30) into the predetermined position, the return unit (48) preferably being realized by an element which is elastic in compression, further preferably by a return spring.

5. Apparatus according to one of claims 1 to 4, wherein
the receiving unit (40) is formed in a way that the applying module is tiltable around a predetermined axis, the spatial position of the predetermined axis preferably being adjustable, and/or
the receiving device (40) has at least one recess formed to receive the applying module (30).

6. Apparatus according to one of claims 1 to 5, wherein
the receiving device (40) has a pressing unit (47) formed to exert a compressive force between the applying module (30) and the receiving device (40), the pressing unit (47) preferably being realized by an element which is elastic in compression, further preferably by a compression spring, and/or
the receiving device (40) has a pressing plate (45) formed in a way so that it can be brought into a position above the applying module (30), the pressing unit (47) or the return unit (48) and the stop (49) being attached at the pressing plate (45), the return unit (48) and the stop (49) preferably being attached at the same pressing plate (45) as the pressing unit (47).

7. Apparatus according to one of claims 1 to 6, wherein the receiving device (40) is formed in a way that the applying module (30) can be inserted without tools into the receiving device (40).

8. Applying module (30), adapted to the insertion into an apparatus according to one of claims 1 to 7, comprising
at least a first applying element suited for applying and distributing the powdery constituent material, and
at least one insertion element (31) to which the applying element is attached and which is formed for inserting the applying module (30) in a predetermined position into the apparatus in a way that the applying module (30) can be exchangeably inserted into and removed from the receiving device (40) in a way that a predetermined position of the applying module (30) in the receiving device (40) is reproducibly determined by tilting the applying module (30) in the receiving device (40).

9. Applying module (30) according to claim 8, wherein
the applying element is an element among elements for compacting the powder, elements for tempering the powder, elements for fluidizing the powder, elements for electrostatically charging or discharging the powder, and/or elements for mixing or sieving the powder, or
the applying element is a smoothing element suited for distributing and smoothing the powdery constituent material, preferably a rigid or flexible blade, a brush, a wiper blade such as a rubber lip, or a rotatably supported smoothing element such as a roller, the applying module thus being a smoothing module, or
the applying element is a blade (20) suited for drawing the powdery constituent material to a layer, the applying module thus being a blade module.

10. Applying module (30) according to claim 8 or 9, wherein
a second applying element (20) is arranged substantially in parallel to the first applying element (20) and attached to the insertion element (31), and/or
the insertion element is formed in the form of to connecting bars (31) parallel to each other, the applying elements (20) preferably being attached via attaching elements (32) to the connecting bars (31), and/or
the applying module (30) is formed in a way that it can be tilted in the receiving device around a predetermined axis, the spatial position of the predetermined axis preferably being adjustable.

11. Applying module (30) according to one of claims 8 to 10, comprising a stop for obtaining the predetermined position, the stop preferably being adjustably formed, the stop further preferably being realized by a setting element, still further preferably by a setting screw.

12. Applying module (30) according to one of claims 8 to 11,
which comprises a return unit formed to cause a movement of the applying module (30) into the predetermined position, the return unit (48) preferably being realized by an element which is elastic in compression, further preferably by a return spring, and/or
which comprises a pressing unit formed to exert a compressive force between the applying module (30) and the receiving device (40), the pressing unit preferably being realized by an element which is elastic in compression, further preferably by a compression spring, and/or
which is formed in a way to be inserted without tools into the apparatus.

13. Method for manufacturing a three-dimensional object (3) by solidifying a powdery constituent material layer by layer at the positions corresponding to the profile of the object (3) to be manufactured in the corresponding layer, by the action of a laser or another energy source using an apparatus according one of the claims 1 to 7, the method comprising the steps
preparing a plurality of applying modules (30) according to one of the claims 8 to 12,
selecting one of these applying modules (30) corresponding to the powdery constituent material used and the desired layer thickness,
inserting the applying module (30) in a reproducibly determined predetermined position into the receiving device (40) of the apparatus
repeated application and solidification of the powdery constituent material for forming the three-dimensional object (3).

14. Method according to claim 13,
which further comprises a step of adjusting the predetermined position before and/or after inserting the applying module (30) into the apparatus, and/or
wherein the step of inserting the applying module (30) into the apparatus comprises returning the applying module (30) against a stop (49) to achieve the predetermined position, the method further comprising a step of adjusting a position of the stop (49) before and/or after inserting the applying module (30) into the apparatus.

15. Method according to claim 13 or 14, wherein
the step of inserting the applying module (30) into the apparatus comprises pressing the applying module (30) against the apparatus, and/or
the step of inserting the applying module (30) into the apparatus comprises pressing the applying module (30) laterally displaced to a predetermined axis for tilting the applying module (30) around the axis and stopping the tilting of the applying module (30) in the predetermined position, and/or
inserting the applying module (30) into the apparatus is carried out without tools.

## Revendications

1. Appareil pour la fabrication d'un objet tridimensionnel (3) par solidification de couches d'un matériau structurant pulvérulent à des emplacements correspondant à la section de l'objet (3) à fabriquer dans chaque couche par action d'un laser ou d'une autre source d'énergie, avec
un support (2), sur lequel l'objet (3) est construit, et
un applicateur (6, 7) pour l'application d'une couche du matériau structurant sur le support ou sur une couche préalablement au moins partiellement solidifiée, lequel comprend un dispositif de réception (40) pour la réception d'un module de revêtement (30),
**caractérisé en ce que**
le dispositif de réception (40) est prévu de telle sorte qu'un module de revêtement (30) sélectionné parmi une pluralité de modules de revêtement pré-réglés peut être mis en place dans le dispositif de réception (40) et retiré de celui-ci de manière remplaçable, afin qu'une position définie du module de revêtement (30) soit fixée de manière reproductible dans le dispositif de réception (40) par pivotement du module de revêtement (30) dans le dispositif de réception (40).

2. Appareil selon la revendication 1, dans lequel le dispositif de réception (40) est prévu pour la réception d'un module de lissage approprié à répartir et à lisser le matériau structurant pulvérulent, de préférence un module à lame (30), et/ou la position définie est réglable avant et/ou après la mise en place du module de revêtement (30) dans le dispositif de réception (40).

3. Appareil selon l'une des revendications 1 ou 2, dans lequel le dispositif de réception (40) comprend une butée (49) pour obtenir la position définie, ladite butée (49) étant de préférence prévue de manière à être réglable, ladite butée (49) étant également de préférence réalisée par un composant de réglage, et également de préférence par une vis de réglage.

4. Appareil selon l'une des revendications 1 à 3, dans lequel le dispositif de réception (40) comprend une unité de rappel (48), prévue pour provoquer un déplacement du module de revêtement (30) vers la position définie, ladite unité de rappel (48) étant de préférence réalisée par un élément élastique à la compression, également de préférence par un ressort de pression.

5. Appareil selon l'une des revendications 1 à 4, dans lequel le dispositif de réception (40) est prévu de telle manière que le module de revêtement est pivotant autour d'un axe défini, la position de l'axe défini étant de préférence réglable, et/ou le dispositif de réception (40) comprend au moins un évidement prévu pour la réception du module de revêtement (30).

6. Appareil selon l'une des revendications 1 à 5, dans lequel le dispositif de réception (40) comprend une unité de pression (47) prévue pour exercer une force de pression entre le module de revêtement (30) et le dispositif de réception (40), l'unité de pression (47) étant de préférence réalisée par un élément élastique à la compression, également de préférence par un ressort de pression, et/ou
le dispositif de réception (40) comprend une plaque de serrage (45) prévue de manière à pouvoir être amenée vers une position au-dessus du module de revêtement (30), et l'unité de pression (47) ou l'unité de rappel (48) et la butée (49) sont appliquées sur la plaque de serrage (45), de préférence l'unité de rappel (48) et la butée (49) étant appliquées sur la même plaque de serrage (45) que l'unité de pression (47).

7. Appareil selon l'une des revendications 1 à 6, dans lequel le dispositif de réception (40) est prévu de telle manière que le module de revêtement (30) peut être mis en place sans outil dans le dispositif de réception (40).

8. Module de revêtement (30), approprié pour être mis en place dans un appareil selon l'une des revendications 1 à 7, avec
au moins un premier élément de revêtement, approprié à appliquer et à répartir le matériau structurant pulvérulent, et
au moins un élément de mise en place (31), sur lequel l'élément de revêtement est fixé et qui est prévu pour la mise en place du module de revêtement (30) dans une position définie dans l'appareil, de telle manière que le module de revêtement (30) puisse être mis en place dans le dispositif de réception (40) de l'appareil et retiré de celui-ci de manière remplaçable, afin qu'une position définie du module de revêtement (30) sont fixée de manière reproductible dans le dispositif de réception (40) par pivotement du module de revêtement (30) dans le dispositif de réception (40).

9. Module de revêtement (30) selon la revendication 8, dans lequel
l'élément de revêtement est un élément parmi des éléments de compactage de la poudre, des éléments de thermostatisation de la poudre, des éléments de fluidisation de la poudre, des éléments de décharge électrostatique ou de décharge de la poudre et/ou des éléments de mélange ou de tamisage de la poudre, ou
l'élément de revêtement est un élément de lissage approprié à répartir et à lisser le matériau structurant pulvérulent, de préférence une lame fixe ou flexible, une brosse, une racle telle qu'une lèvre en caoutchouc, ou un élément de lissage monté de manière rotative tel qu'un cylindre, de telle sorte que le module de revêtement est un module de lissage, ou
l'élément de revêtement est une lame (20) appropriée au repassage du matériau structurant pulvérulent pour former une couche, de telle sorte que le module de revêtement est un module à lame.

10. Module de revêtement (30) selon l'une des revendications 8 ou 9, dans lequel
un deuxième élément de revêtement (20) est disposé sensiblement parallèlement au premier élément de revêtement (20) et fixé sur l'élément de mise en place (31), et/ou
l'élément de mise en place est prévu sous la forme de deux entretoises de liaison (31) parallèles entre elles, les éléments de revêtement (20) étant de préférence reliés aux entretoises de liaison (31) par des éléments de fixation (32), et/ou
le module de revêtement est prévu pour être pivotant autour d'un axe défini dans le dispositif de réception, la position de l'axe défini étant de préférence réglable.

11. Module de revêtement (30) selon l'une des revendications 8 à 10, comprenant une butée pour obtenir la position définie, ladite butée (49) étant de préférence prévue de manière à être réglable, ladite butée (49) étant également de préférence réalisée par un composant de réglage, et également de préférence par une vis de réglage.

12. Module de revêtement (30) selon l'une des revendications 8 à 11, comprenant une unité de rappel prévue pour provoquer un déplacement du module de revêtement (30) vers la position définie, ladite unité de rappel (48) étant de préférence réalisée par un élément élastique à la compression, également de préférence par un ressort de pression, et/ou
comprenant une unité de pression, prévue pour exercer une force de pression entre le module de revêtement (30) et le dispositif de réception (40), l'unité de pression étant de préférence réalisée par un élément élastique à la compression, également de préférence par un ressort de pression, et/ou
pouvant être mis en place sans outil dans l'appareil.

13. Procédé pour la fabrication d'un objet tridimensionnel par solidification de couches d'un matériau structurant pulvérulent à des emplacements correspondant à la section de l'objet à fabriquer dans chaque couche par action d'un laser ou d'une autre source d'énergie, avec un appareil selon l'une des revendications 1 à 7, et comprenant les étapes de
préparation d'une pluralité de modules de revêtement (30) selon l'une des revendications 8 à 12,
sélection d'un de ces modules de revêtement (30) en fonction du matériau structurant pulvérulent utilisé et de l'épaisseur de couche souhaitée,
mise en place du module de revêtement (30) dans une position définie dans un appareil pour la fabrication d'un objet tridimensionnel et
application répétée et solidification en couches du matériau structurant pulvérulent pour former l'objet tridimensionnel (3).

14. Procédé selon la revendication 13, comprenant en outre une étape de réglage de la position définie avant et/ou après la mise en place du module de revêtement (30) dans l'appareil, et/ou l'étape de mise en place du module de revêtement (30) dans l'appareil comporte le rappel du module de revêtement (30) contre une butée (49) pour atteindre la position définie, le procédé comprenant de préférence encore une étape de réglage d'une position de la butée (49) avant et/ou après la mise en place du module de revêtement (30) dans l'appareil.

15. Procédé selon l'une des revendications 13 ou 14, dans lequel
l'étape de mise en place du module de revêtement (30) dans l'appareil comporte le serrage du module de revêtement (30) contre l'appareil, et/ou
l'étape de mise en place des modules de revêtement (30) dans l'appareil comporte :
le serrage (48) du module de revêtement (30) en décalage latéral par rapport à un axe défini pour faire pivoter le module de revêtement (30) autour de l'axe, et
l'arrêt (49) du pivotement du module de revêtement (30) dans la position définie, et/ou
la mise en place du module de revêtement (30) dans l'appareil est effectuée sans outil.
